# EUROPEAN PATENT SPECIFICATION

(11) **EP 1 884 292 B1**
(45) Date of publication and mention of the grant of the patent: **01.09.2010**
(21) Application number: 07110658.7
(22) Date of filing: 20.06.2007
(51) Int. Cl.: B05B 12/00

(54) **Water flow volume display device for watering nozzle**
Vorrichtung zum Anzeigen des Wasserdurchflussvolumens für eine Wasserdüse
Dispositif d'affichage du volume d'écoulement d'eau pour buse d'arrosage

(30) Priority: 02.08.2006 CN 200620130620 U
(43) Date of publication of application: 06.02.2008
(73) Proprietor: Chen, Ho-Chin, Taichung Hsien (TW)
(72) Inventor: Chen, Yann-Shoou, Hsinchu City (TW)
(74) Representative: Viering, Jentschura & Partner

(56) References cited:
- EP-A- 1 464 927
- EP-A- 1 655 584
- US-A- 4 883 199
- US-A- 4 936 508
- US-A- 5 372 048
- US-A1- 2003 233 885

## Description

### FIELD OF THE INVENTION

The present invention relates to a water flow volume display device which is connected on a top of the water nozzle so as to display the water volume flowing out from the watering nozzle.

### BACKGROUND OF THE INVENTION

US4883199 discloses a fluid dispensing unit for dispensing a predetermined volume of fluid, said unit comprising a rotary positive displacement measuring means having an inlet and an outlet; a valve connected to said measuring means, said valve having an open positioned and a closed position inlet; actuating means for opening the valve; means for biasing said valve in a closed position; means for latching said valve in an open position; means for releasing said latch means in response to the passage of said predetermined fluid volume through said measuring means said release means comprising an unbiased solenoid, and a battery power source powering the measuring means and energizing the solenoid, the solenoid releasing said latch means upon dispensing of said predetermined volume of fluid.

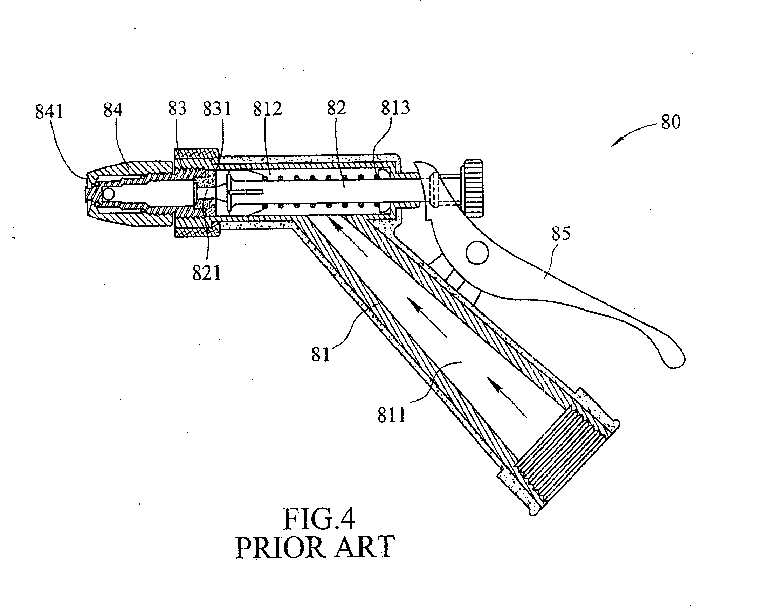

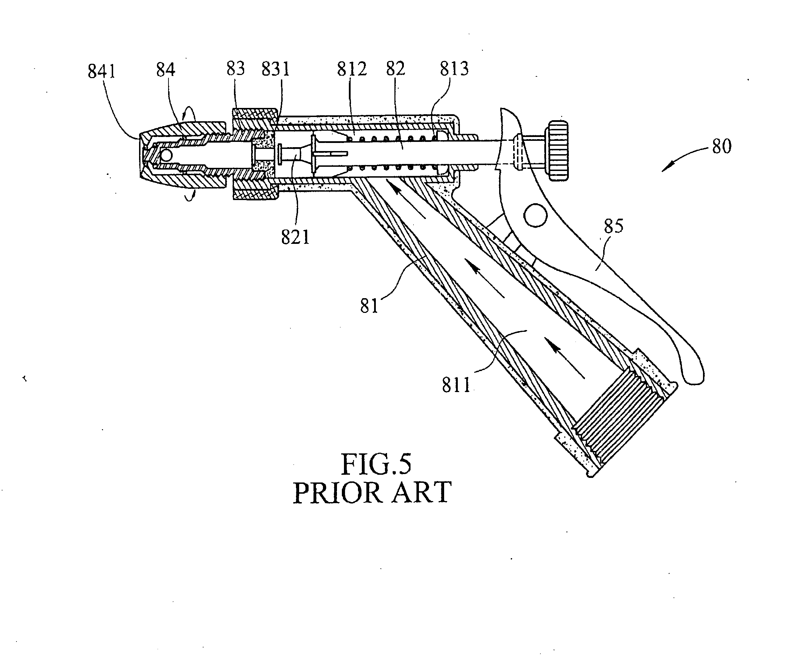

A conventional watering nozzle 80 is shown in Figs. 4 and 5, and generally includes a barrel which has a first passage 812 defined therein and a handle 81 is connected to the barrel and a second passage 811 is defined through the handle 81. The first and second passages 812, 81 are in communication with each other. An operation rod 82 is movably inserted into the first passage 812 from a rear end of the barrel and a spring 813 is mounted onto the operation rod 82. A collar 831 is received in the first passage 812 and has a central hole in which an insertion 821 on an end of the operation rod 82 is removably inserted. A nozzle member 83 is connected to the front end of the barrel and a rotatable member 84 is rotatably mounted onto the nozzle member 83. An operation bar 85 is pivotably connected to the handle 81 and has one end pivotably connected to the operation rod 82. When operating the operation bar 85, the operation rod 82 is pulled and the insertion 821 is removed from the central hole of the collar 831, so that water flows through the from the second passage 811, enters into the first passage 812, flows through the central hole of the collar 831 and flows out from a through hole in the nozzle member 83. The user may rotate the rotatable member 84 to adjust the size of the gap between the opening 841 of the rotatable member 84 and the distal end of the nozzle member 83 to adjust the pattern of the water beam. When releasing the operation bar 85, the operation rod 82 is moved to insert the insertion 821 in the central hole of the collar 831 to seal the central hole so that the water cannot flow out from the opening 841 of the rotatable member 84. However, the water volume that released from the opening 841 of the rotatable member 84 is unknown and the water volume is crucial for some situations such when watering specific plants like orchids.

The present invention intends to provide a watering nozzle with a water volume display device which displays the volume of water that goes out from the watering nozzle.

### SUMMARY OF THE INVENTION

The invention provides a watering nozzle according to claim 1. Further embodiments of the invention are described in the dependent claims.

The present invention relates to a watering nozzle that comprises a barrel and a handle connected to the barrel. An operation device includes a trigger and a switch, wherein the switch is connected to the handle and the trigger is pivotably connected to the barrel. The trigger can be pivotable to touch the switch and to operate a valve unit to allow water to enter into the watering nozzle. A nozzle unit is connected to a first end of the barrel and a water volume detection unit is received in the barrel. The water volume detection unit has a rotatable member which has a magnet connected thereto. A display unit is connected to the barrel and has a circuit board and a display member which is electrically connected to the circuit board. A battery unit is connected to a second end of the barrel and is electrically connected to the switch. A magnetic spring switch is connected to the circuit board and detects a number of revolution of the rotatable member by detecting times that the magnet passes by the magnetic spring switch. The times of revolution of the rotatable member are transferred into digits displayed on the display member.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the watering nozzle of the present invention;
Fig. 2 is an exploded view to show the watering nozzle of the present invention;
Fig. 3 is a cross sectional view of the watering nozzle of the present invention;
Fig. 4 is a cross sectional view of a conventional the watering nozzle, and
Fig. 5 is a cross sectional view to show that the operation rod of the conventional the watering nozzle is pulled by operating the operation bar.

### DETAILED DESCRIPTION OF THE PREFERRED EMBODIMENT

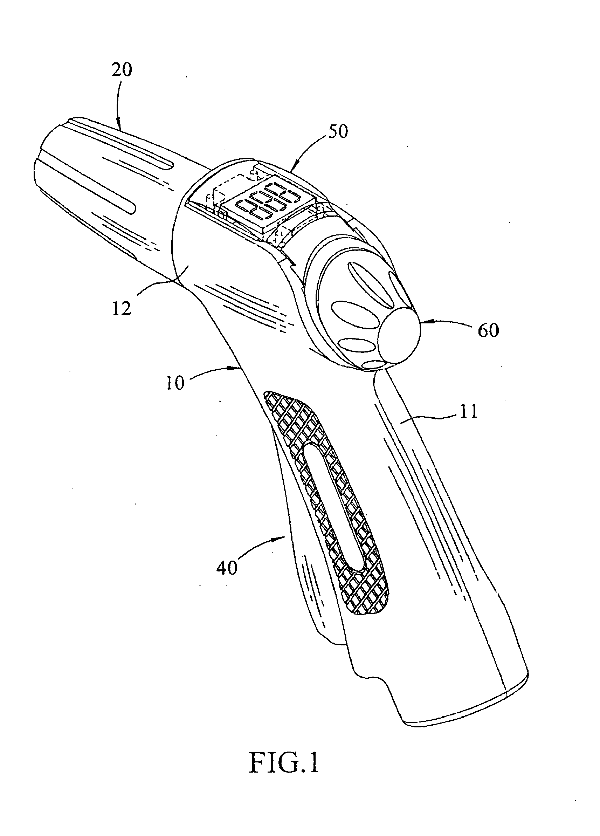

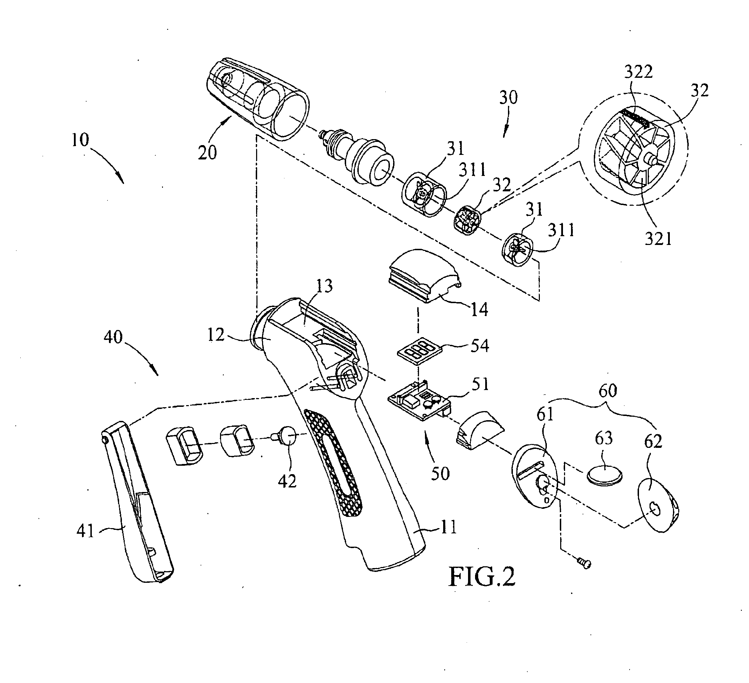

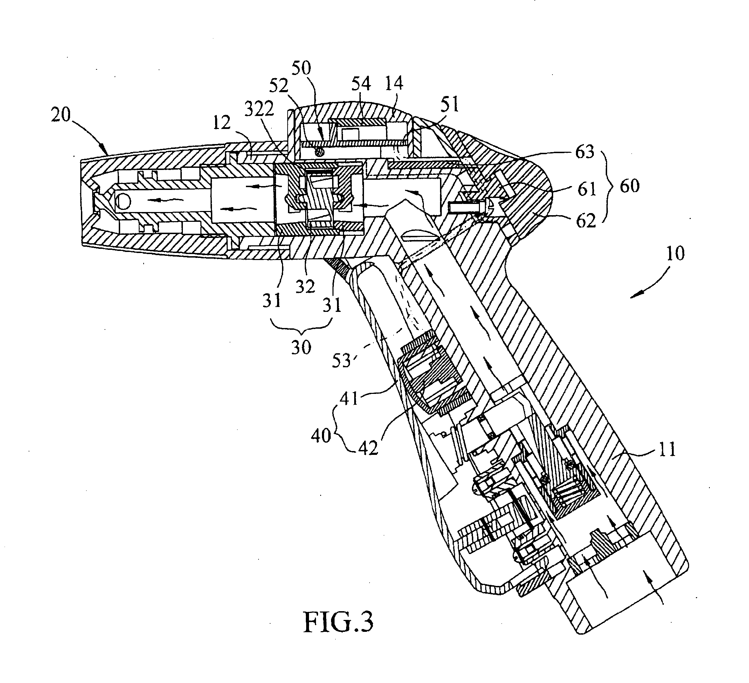

Referring to Figs. 1 to 3, the watering nozzle 10 of the present invention comprises a barrel 12 and a handle 11 which connected to the barrel 12. A first passage is defined in the handle 11 and the barrel 12 has a second passage which communicates with the first passage. The handle 11 can be connected with a hose to introduce water into the first passage.

A nozzle unit 20 is connected to a first end of the barrel 12 and includes a nozzle member and a rotatable member which is rotatable relative to the nozzle member so as to adjust a gap between an opening of the rotatable member and the nozzle member. The nozzle unit 20 is a well known device and will not be described hereinafter. A water volume detection unit 30 is received the second passage in the barrel 12 and includes two stationary members 31 and a rotatable member 32 which is rotatably connected between the two stationary members 31. Each of the two stationary members 31 has a through passage 311 defined therethrough and the rotatable member 32 has a magnet 322 connected thereto. The rotatable member 32 includes a central shaft and a plurality of inclined blades 321 are connected radially between the shaft and an inner periphery of the rotatable member 32. Two protrusions extend from two ends of the shaft of the rotatable member 32 and each of the two stationary members 31 has a recess so that the two protrusions are rotatably engaged with the two respective recesses of the two stationary members 31. When water flows through the rotatable member 32, the water hits the inclined blades 321 and rotates the rotatable member 32.

An operation device 40 is connected to the watering nozzle 10 and has a trigger 41 and a switch 42. The switch 42 is connected to the handle 11 and the trigger 41 is pivotably connected to the barrel 12. The trigger 41 is pivotable to touch the switch 42 and to operate a valve unit to allow water to enter into the first passage.

A display unit 50 is received in a recessed area 13 defined in a top of the barrel 12 and includes a circuit board 51 and a display member 54 which is electrically connected to the circuit board 51 and has a plurality of Light Crystal Diodes. A transparent cover 14 is engaged with the recessed area 13 so that the user can see the display member 54 via the transparent cover 14.

A battery unit 60 is connected to a second end of the barrel 12 and has a battery 63 which is electrically connected to the switch 42 and the switch 42 by a wire 53. The battery unit 60 includes two positioning members 61, 62 and the battery 63 is located between the two positioning members 61, 62. The battery 63 extends through a slot defined in positioning member 61. A magnetic spring switch 52 is connected to the circuit board 51 and located above the rotatable member 32.

When the user pulls the trigger 41, the valve unit is activated to introduce water into the first passage of the handle 11, The switch 42 is also activated when the trigger 41 is pulled, the number of revolution of the rotatable member 32 is detected by the times that the magnet 322 passes by the magnetic spring switch 52. The times of revolution of the rotatable member 32 are transferred digits displayed on the display member 54. Each revolution of the rotatable member 32 allows a certain amount of the water to pass through the rotatable member 32 so that the times of the revolutions of the rotatable member 32 can be transferred into digits which represents volume of water passing through the rotatable member 32 and the nozzle unit 20.

When the user releases the trigger 41, the valve unit is moved to its initial position by the spring of the valve unit so that water cannot enter into the first and second passages. In the same time, the switch 42 is not in contact with the trigger 41 so that the display unit 50 displays its initial status.

While we have shown and described the embodiment in accordance with the present invention, it should be clear to those skilled in the art that further embodiments may be made without departing from the scope of the present invention.

## Claims

1. A watering nozzle (10) comprising a barrel (12) and a handle (11) which is connected to the barrel (12), whereby a first passage is defined in the handle (11) and the barrel (12) has a second passage which communicates with the first passage, an operation device (40) is connected to the watering nozzle (10) and has a trigger (41) and a switch (42), the trigger (41) is pivotable to touch the switch (42) and to operate a valve unit to be adapted to allow water to enter into the first passage;
a nozzle unit (20) is connected to a first end of the barrel (12) and a water volume detection unit (30) is received in the second passage in the barrel (12), the water volume detection unit (30) has two stationary members (31) and a rotatable member (32) which is rotatably connected between the two stationary members (31), the two stationary members (31) and the rotatable member (32) are located along a direction that water flows therethrough, each of the two stationary members (31) has a through,passage (311) defined therethrough and the rotatable member (32) has a magnet (322) connected thereto, the water flows through the through passages (311) in the two stationary members (31) and the rotatable member (32), the rotatable member (32) includes a central shaft and a plurality of incline blades (321) which are connected radially between the shaft and an inner periphery of the rotatable member (32), the central shaft is located parallel to a direction that the water flows, the water hits the inclined blades (321) which rotates the central shaft, two protrusions extend from two ends of the central shaft of the rotatable member (32) and each of the two stationary members (31) has a recess, the two protrusions are rotatably engaged with the two respective recesses of the two stationary members (31);
a display unit (50) is connected to the barrel (12) and has a circuit board (51) and a display member (54) which is electrically connected to the circuit board (51), and
a battery unit (60) is connected to a second end of the barrel (12) and has a battery (63) which is electrically connected to the switch (42), a magnetic spring switch (52) is connected to the circuit board (51) and detects a number of revolution of the rotatable member (32) by detecting times that the magnet (322) passes by the magnetic spring switch (52), the times of revolution of the rotatable member (32) are transferred into digits displayed on the display member (54).

2. The watering nozzle as claimed in claim 1, wherein the battery unit (60) includes two positioning members (61, 62) and the battery (63) is located between the two positioning members (61, 62), the battery (63) extends through a slot defined in one of the two positioning members (61, 62).

3. The watering nozzle as claimed in claim 1, wherein a recessed area (13) is defined in the barrel (12) and the display unit (50) is received in the recessed area (13).

4. The watering nozzle as claimed in claim 3, wherein a transparent cover (14) is engaged with the recessed area (13).

## Patentansprüche

1. Bewässerungsdüse (10), die einen Lauf (12) und einen Griff (11) aufweist, der an dem Lauf (12) angeschlossen ist, wobei eine erste Passage in dem Griff (11) definiert ist und der Lauf (12) eine zweite Passage aufweist, die mit der ersten Passage in Verbindung steht, wobei eine Betätigungsvorrichtung (40) an der Bewässerungsdüse (10) angeschlossen ist und einen Auslöser (41) und einen Schalter (42) aufweist, wobei der Auslöser (41) schwenkbar ist, um den Schalter (42) anzutasten und eine Ventileinheit zu betätigen, um angepasst zu werden, ein Eintreten von Wasser in die erste Passage hinein zu ermöglichen,
wobei eine Düseneinheit (20) an einem ersten Ende des Laufes (12) angeschlossen ist und eine Wassermengenerfassungseinheit (30) in der zweiten Passage in dem Lauf (12) aufgenommen ist, wobei die Wassermengenerfassungseinheit (30) zwei stationäre Elemente (31) und ein drehbares Element (32) aufweist, das drehbar zwischen den zwei stationären Elementen (31) angeschlossen ist, wobei die zwei stationären Elemente (31) und das drehbare Element (32) entlang einer Richtung angeordnet sind, durch die hindurch Wasser fließt, wobei jedes der zwei stationären Elemente (31) eine Durchgangspassage (311) aufweist, die dorthindurch definiert ist, und das drehbare Element (32) einen Magneten (322) aufweist, der daran angeschlossen ist, wobei das Wasser durch die Durchgangspassagen (311) in den zwei stationären Elementen (31) und durch das drehbare Element (32) fließt, wobei das drehbare Element (32) einen zentralen Schaft und eine Mehrzahl von geneigten Blättern (321) aufweist, die zwischen dem Schaft und einem Innenumfang des drehbaren Elementes (32) radial angeschlossen sind, wobei der zentrale Schaft parallel
zu einer Richtung angeordnet ist, in der das Wasser fließt, das Wasser die geneigten Blätter (321) anstößt, das den zentralen Schaft dreht, wobei zwei Vorsprünge von zwei Enden des zentralen Schaftes des drehbaren Elementes (32) hervorstehen und jedes der zwei stationären Elemente (31) eine Vertiefung hat, wobei die zwei Vorsprünge mit den zwei jeweiligen Vertiefungen der zwei stationären Elemente (31) in drehbarem Eingriff sind,
wobei eine Anzeigeeinheit (50) an dem Lauf (12) angeschlossen ist und eine Leiterplatte (51) und ein Anzeigeelement (54) aufweist, das mit der Leiterplatte (51) elektrisch verbunden ist, und
wobei eine Batterieeinheit (60) an einem zweiten Ende des Laufes (12) angeschlossen ist und eine Batterie (63) aufweist, die mit dem Schalter (42) elektrisch verbunden ist, wobei ein Magnetfederschalter (52) mit der Leiterplatte (51) verbunden ist und eine Umdrehungszahl des drehbaren Elementes (32) erfasst durch Erfassen der Male, die der Magnet (322) an dem Magnetfederschalter (52) vorbeiläuft, wobei die Male der Umdrehung des drehbaren Elementes (32) in Ziffern übertragen werden, die auf dem Anzeigeelement (54) angezeigt werden.

2. Bewässerungsdüse gemäß Anspruch 1, wobei die Batterieeinheit (60) zwei Positionierelemente (61, 62) aufweist und die Batterie (63) zwischen den zwei Positionierelementen (61, 62) angeordnet ist, wobei sich die Batterie (63) durch einen Schlitz hindurch erstreckt, der in einem der zwei Positionierelemente (61, 62) definiert ist.

3. Bewässerungsdüse gemäß Anspruch 1, wobei ein Aussparungsbereich (13) in dem Lauf (12) definiert ist und die Anzeigeeinheit (50) in dem Aussparungsbereich (13) aufgenommen ist.

4. Bewässerungsdüse gemäß Anspruch 3, wobei eine transparente Abdeckung (14) mit dem Aussparungsbereich (13) in Eingriff ist.

## Revendications

1. Pistolet d'arrosage (10) qui comprend un barillet (12) et une poignée (11) qui est reliée au barillet (12), moyennant quoi un premier passage est défini au sein de la poignée (11) et le barillet (12) possède un second passage qui communique avec le premier passage, un dispositif d'actionnement (40) est relié au pistolet d'arrosage (10) et possède une gâchette (41) et un bouton (42), la gâchette (41) peut tourner afin de toucher le bouton (42) et d'enclencher une soupape qui permet à l'eau de pénétrer dans le premier passage ;
une buse (20) est reliée à une première extrémité du barillet (12) et une unité de détection de volume d'eau (30) est contenue dans le second passage au sein du barillet (12), l'unité de détection de volume d'eau (30) possède deux éléments stationnaires (31) et un élément rotatif (32) qui est relié de manière rotative entre les deux éléments stationnaires (31), les deux éléments stationnaires (31) et l'élément rotatif (32) sont situés le long d'une direction d'écoulement de l'eau, chacun des deux éléments stationnaires (31) possède un passage traversant (311) défini à l'intérieur, et l'élément rotatif (32) possède un aimant (322) relié à celui-ci, l'eau s'écoule par les passages traversants (311) au sein des deux éléments stationnaires (31) et de l'élément rotatif (32), l'élément rotatif (32) comprend un axe central et une pluralité d'aubes inclinées (321) qui sont reliées radialement entre l'axe et une périphérie intérieure de l'élément rotatif (32), l'axe central est parallèle à une direction d'écoulement de l'eau, l'eau vient en contact avec les aubes inclinées (321) et fait tourner l'axe central, deux saillies s'étendent depuis deux extrémités de l'axe central de l'élément rotatif (32) et chacun des deux éléments stationnaires (31) possède un renfoncement, les deux saillies sont engagées par rotation avec les deux renfoncements respectifs des deux éléments stationnaires (31) ;
une unité d'affichage (50) est reliée au barillet (12) et possède une carte de circuit imprimé (51) et un élément d'affichage (54) qui est relié électriquement à la carte de circuit imprimé (51), et
une unité de batterie (60) est reliée à une seconde extrémité du barillet (12) et possède une batterie (63) qui est reliée électriquement au bouton (42), un bouton à ressort magnétique (52) est relié à la carte de circuit imprimé (51) et détecte le nombre de tours de l'élément rotatif (32) en détectant le nombre de fois où l'aimant (322) passe près du bouton à ressort magnétique (52), et le nombre de tours de l'élément rotatif (32) est converti en chiffres affichés sur l'élément d'affichage (54).

2. Pistolet d'arrosage selon la revendication 1, dans lequel l'unité de batterie (60) comprend deux éléments de positionnement (61, 62) et la batterie (63) est située entre les deux éléments de positionnement (61, 62), la batterie (63) s'étendant dans une encoche définie dans l'un des deux éléments de positionnement (61, 62).

3. Pistolet d'arrosage selon la revendication 1, dans lequel une zone renfoncée (13) est définie dans le barillet (12) et l'unité d'affichage (50) est contenue dans la zone renfoncée (13).

4. Pistolet d'arrosage selon la revendication 3, dans lequel un capot transparent (14) est engagé avec la zone renfoncée (13).
